(19) Europäisches Patentamt
European Patent Office
Office européen des brevets

(11) Publication number: **0 653 445 A1**

(12) # EUROPEAN PATENT APPLICATION

(21) Application number: **94117674.5**

(51) Int. Cl.[6]: **C08F 210/16**

(22) Date of filing: **09.11.94**

(30) Priority: **11.11.93 JP 282373/93**

(43) Date of publication of application: **17.05.95 Bulletin 95/20**

(84) Designated Contracting States: **DE FR GB NL**

(71) Applicant: **Tosoh Corporation**
**4560, Kaisei-cho**
**Shinnanyo-shi,**
**Yamaguchi-ken (JP)**

(72) Inventor: **Sone, Makoto**
**2529, Komono-cho Komono**
**Mie-gun,**
**Mie-ken (JP)**
Inventor: **Matsuo, Hidehiko**
**3-4-1 Betsumeiho Komono**
**Yokkaichi-shi,**
**Mie-ken (JP)**
Inventor: **Yano, Akihiro**
**3-4-1 Betsumeiho Komono**
**Yokkaichi-shi,**
**Mie-ken (JP)**
Inventor: **Sato, Morihiko**
**128, Hazuotsu**
**Yokkaichi-shi,**
**Mie-ken (JP)**
Inventor: **Tsuruta, Akeharu**
**3-5-1 Betsumei**
**Yokkaichi-shi,**
**Mie-ken (JP)**

(74) Representative: **VOSSIUS & PARTNER**
**Siebertstrasse 4**
**D-81675 München (DE)**

(54) **Ethylene/alpha-olefin copolymer.**

(57) An ethylene/$\alpha$-olefin copolymer is provided which is constituted of ethylene with $\alpha$-olefin of three or more carbons, satisfying the conditions:

(A) MFR ranging from 0.001 to 100 g/10min,

(B) density (d) ranging from 0.86 to 0.94 g/cm$^3$,

(C) ratio (Mw/Mn) of weight-average molecular weight (Mw) to number-average molecular weight (Mn) being not higher than 3,

(D) difference $Ea = Ea_{(0.1)} - Ea_{(100)}$ of the activation energies $Ea_{(0.1)}$ and $Ea_{(100)}$ (kcal/mol) of loss elastic modulus G'' at the standard temperature 190 °C at frequency $\omega_0 = 0.1$ (rad/sec) and $\omega_1 = 100$ (rad/sec), respectively, satisfies the relation (1) below:

$$-0.3 < \Delta Ea < 0.3 \quad (1)$$

and $Ea_{(100)}$ and short chain branching number (SCB) satisfy the relation (2) below:

$$Ea_{(100)} > 0.155 \times SCB + 6.5 \quad (2).$$

The copolymer has high melt elasticity, high transparency, and excellent heat-sealing properties.

EP 0 653 445 A1

The present invention relates to a novel ethylene copolymer which exhibits higher melt tension and higher transparency than known ethylene copolymers.

Ethylene/α-olefin copolymers having a density of not higher than 0.940 g/cm$^3$ are known as linear low density polyethylenes (LLDPE). Such linear low density polyethylenes are superior to high density polyethylenes in transparency, impact resistance, and environmental stress cracking resistance (ESCR), and are superior to high-pressure low-density polyethylenes in impact resistance and creep resistance. Therefore, LLDPE's are widely used in the fields of packing materials, especially as packing films and laminating films.

The LLDPE, however, is inferior to high-pressure low-density polyethylenes in transparency and melt elasticity, therefore having disadvantages of less transparency of the film, less stability of the bubble in inflation molding, and larger neck-in. Conventional high-pressure LDPE's are superior to LLDPE's in transparency but are inferior in mechanical strength such as tensile strength at break. Moreover, when the ratio of α-olefin comonomer is increased to lower the density of LLDPE, slip properties of the laminated film are impaired, blocking of the film is caused, heat-sealing properties are limited because of broad distribution of the comonomer composition.

JP-A-60-88016 discloses improvement of transparency, low-temperature heat-sealability, and anti-blocking properties by adjustment of composition distribution and other characteristics. However, such LLDPE is not improved in melt elasticity.

It is an object of the present invention to provide an ethylene copolymer which is excellent in melt elasticity, transparency, and heat-sealability.

This object could be achieved on the basis of the finding that an ethylene/α-olefin copolymer is remarkably improved in transparency, heat-sealing properties, and melt elasticity without impairing the properties of conventional LLDPE, when its activation energy of loss elastic modulus is higher than that of conventional LLDPE independently of frequency and its Mw/Mn ratio is not higher than 3.

The copolymer of the present invention is an ethylene/α-olefin copolymer formed by copolymerization of ethylene with an α-olefin of three or more carbons, satisfying the conditions:

(A) MFR ranging from 0.001 to 100 g/10min,

(B) density (d) ranging from 0.86 to 0.94 g/cm$^3$,

(C) ratio (Mw/Mn) of weight-average molecular weight (Mw) to number-average molecular weight (Mn) being not higher than 3,

(D) difference $\Delta Ea = Ea_{(0.1)} - Ea_{(100)}$ of the activation energies $Ea_{(0.1)}$ and $Ea_{(100)}$ (kcal/mol) of loss elastic modulus G'' at the standard temperature 190 °C at frequency $\omega_0 = 0.1$ (rad/sec) and $\omega_1 = 100$ (rad/sec), respectively, satisfies the relation (1) below:

$$-0.3 < \Delta Ea < 0.3 \qquad (1)$$

and $Ea_{(100)}$ and short chain branching number (SCB) satisfy the relation (2) below:

$$Ea_{(100)} > 0.155 \times SCB + 6.5 \qquad (2)$$

Fig. 1 shows the dependency of the activation energies of the copolymers of Examples 1 and 3 and Comparative Examples 1 and 3 on the frequency.

Fig. 2 shows the relation of the melt tension and the MFR of the copolymers of Examples 1 to 3 and Comparative Examples 1 to 3.

The ethylene/α-olefin copolymer of the present invention has an MFR in the range of from 0.001 to 100/10min. The copolymer having an MFR of less than 0.001/10min is poor in fluidity, whereas the copolymer having an MFR of more than 100/10min is poor in impact resistance.

The ethylene/α-olefin copolymer of the present invention has a density (d) in the range of from 0.86 to 0.94 g/cm$^3$. The copolymer having a density of lower than 0.86 g/cm$^3$ exhibits lower rigidity, whereas the copolymer having a density of higher than 0.94 g/cm$^3$ is poor in impact resistance and tear strength.

The ethylene/α-olefin copolymer of the present invention is prepared by copolymerisation of ethylene with an α-olefin of 3 or more carbons. The α-olefin of 3 or more carbons includes propylene, butene-1, pentene-1, hexene-1, 4-methyl-pentene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1 and icosene-1. Two or more olefins may be combinedly used. The α-olefin is copolymerized usually in an amount of from 1 to 40 % by weight of the whole polymer.

Further, the copolymer of the present invention exhibits the difference $\Delta Ea = Ea_{(0.1)} - Ea_{(100)}$ of the activation energies $Ea_{(0.1)}$ and $Ea_{(100)}$ (kcal/mol) of loss elastic modulus G'' at the standard temperature

190 °C at frequency $\omega_0$ = 0.1 (rad/sec) and $\omega_1$ = 100 (rad/sec), respectively, satisfies the relation (1) below:

$-0.3 < \Delta Ea < 0.3$ (1)

and further the copolymer satisfies the relation between $Ea_{(100)}$ and short chain branching number (SCB) of the relation (2) below:

$Ea_{(100)} > 0.155 \times SCB + 6.5$ (2)

Ethyene/α-olefin copolymers satisfying the relation (1) are known. However, the limitation of the relation (1) is not the only condition for the desired melt elasticity. The ethylene/α-olefin copolymer satisfying the relation (2) in addition to the relation (1) of the present invention has improved melt elasticity in comparison with conventional ethylene/α-olefin copolymers.

The ethylene/α-olefin copolymer of the present invention has the ratio of weight-average molecular weight (Mw) to number-average molecular weight (Mn), namely Mw/Mn, of 3 or less. At the Mw/Mn ratio of higher than 3, the impact resistance of the copolymer is significantly low.

Furthermore, the ethylene/α-olefin copolymer of the present invention exhibits an extremely simple and sharp endothermic peak in differential scanning calorimetry (DSC) in comparison with conventional LLDPE which exhibits a plurality of complicated peaks in DSC. In particular, among the ethylene/α-olefin copolymers of the present invention, those which satisfy the relation (3) below:

$Tm < -1.8(SCB) + 138$ (3)

between the temperature of the peak of the endothermic curve (Tm (°C)) and the number of short chain branches (SCB) for 1000 carbon atoms determined by IR spectroscopy are greatly improved in heat-sealability, haze, processability, and transparency. Those satisfying the relation (3') below are preferred more therefor:

$Tm < -1.8(SCB) + 135$ (3')

The above-described copolymer of the present invention can be produced by copolymerization of ethylene with α-olefin by use of a catalyst system constituted basically of a transition metal compound and an organometallic compound. Specifically the copolymerization is conducted at a temperature of 120 °C or higher with a catalyst system, for example, comprising (a) a metallocene compound, (b) an ionizing ionic compound, and (c) an organoaluminum compound:
the metallocene compound (a) being represented by the general formula (4) below:

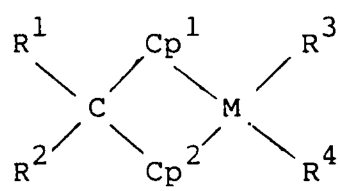

(4)

where $Cp^1$ and $Cp^2$ are independently a substituted or unsubstituted cyclopentadienyl, indenyl, or fluorenyl group; $R^1$ and $R^2$ are independently an alkyl, alkoxy or aryl group, or a hydrogen atom; M is a titanium atom, a zirconium atom, or a hafnium atom; and $R^3$, and $R^4$ are independently a hydrogen atom, a halogen atom, a hydrocarbon group of 1 to 12 carbon atoms, an alkoxy group, or aryloxy group;
the ionizing ionic compound (b) being a compound which is capable of changing the above metallocene compound (a) into a cationic metallocene compound; and
the organoaluminum compound (c) being represented by the general formula (5):

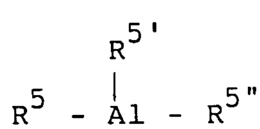

(5)

where $R^5$, $R^{5'}$, and $R^{5''}$ are independently a hydrogen atom, a halogen atom, an amido group, an alkyl group, an alkoxy group, or an aryl group, and at least one of $R^5$, $R^{5'}$, and $R^{5''}$ is an alkyl group.

The aforementioned metallocene compound (a) represented by the general formula (4) is exemplified by:
isopropylidene(cyclopentadienyl)(fluorenyl)titanium dichloride,
isopropylidene(cyclopentadienyl)(fluorenyl)zirconium dichloride,
diphenylmethylene(cyclopentadienyl)(fluorenyl)titanium dichloride,
diphenylmethylene(cyclopentadienyl)(fluorenyl)zirconium dichloride,
methylphenylmethylene(cyclopentadienyl)(fluorenyl)titanium dichloride,
methylphenylmethylene(cyclopentadienyl)(fluorenyl)zirconium dichloride,
isopropylidene(cyclopentadienyl)(2,7-dimethylfluorenyl)titanium dichloride,
isopropylidene(cyclopentadienyl)(2,7-di-t-butylfluorenyl)titanium dichloride,
isopropylidene(cyclopentadienyl)(2,7-dimethylfluorenyl)zirconium dichloride,
isopropylidene(cyclopentadienyl)(2,7-di-t-butylfluorenyl)zirconium dichloride,
diphenylmethylene(cyclopentadienyl)(2,7-dimethylfluorenyl)titanium dichloride,
diphenylmethylene(cyclopentadienyl)(2,7-di-t-butylfluorenyl)titanium dichloride,
diphenylmethylene(cyclopentadienyl)(2,7-dimethylfluorenyl)zirconium dichloride,
diphenylmethylene(cyclopentadienyl)(2,7-di-t-butylfluorenyl)zirconium dichloride,
methylphenylmethylene(cyclopentadienyl)(2,7-dimethylfluorenyl)titanium dichloride,
methylphenylmethylene(cyclopentadienyl)(2,7-di-t-butylfluorenyl)titanium dichloride,
methylphenylmethylene(cyclopentadienyl)(2,7-dimethylfluorenyl)zirconium dichloride,
methylphenylmethylene(cyclopentadienyl)(2,7-di-t-butylfluorenyl)zirconium dichloride,
isopropylidenebis(cyclopentadienyl)titanium dichloride,
isopropylidenebis(cyclopentadienyl)zirconium dichloride,
diphenylmethylenebis(cyclopentadienyl)titanium dichloride,
diphenylmethylenebis(cyclopentadienyl)zirconium dichloride,
methylphenylmethylenebis(cyclopentadienyl)titanium dichloride,
methylphenylmethylenebis(cyclopentadienyl)zirconium dichloride,
isopropylidene(cyclopentadienyl)(tetramethylcyclopentadienyl)titanium dichloride,
isopropylidene(cyclopentadienyl)(tetramethylcyclopentadienyl)zirconium dichloride,
diphenylmethylene(cyclopentadienyl)(tetramethylcyclopentadienyl)titanium dichloride,
diphenylmethylene(cyclopentadienyl)(tetramethylcyclopentadienyl)zirconium dichloride,
ispropylidenebis(indenyl)titanium dichloride,
ispropylidenebis(indenyl)zirconium dichloride,
diphenylmethylenebis(indenyl)titanium dichloride,
diphenylmethylenebis(indenyl)zirconium dichloride,
methylphenylmethylenebis(indenyl)titanium dichloride and
methylphenylmethylenebis(indenyl)zirconium dichloride,

and the corresponding compounds of hafnium as the metal M. The metallocene compounds are not limited thereto.

The ionizing ionic compound (b) is exemplified by:
tri(n-butyl)ammonium tetrakis(p-tolyl)borate,
tri(n-butyl)ammonium tetrakis(m-tolyl)borate,
tri(n-butyl)ammonium tetrakis(2,4-dimethylphenyl)borate,
tri(n-butyl)ammonium tetrakis(3,5-dimethylphenyl)borate,
tri(n-butyl)ammonium tetrakis(pentafluorophenyl)borate,
N,N-dimethylanilinium tetrakis(p-tolyl)borate,
N,N-dimethylanilinium tetrakis(m-tolyl)borate,
N,N-dimethylanilinium tetrakis(2,4-dimethylphenyl)borate,
N,N-dimethylanilinium tetrakis(3,5-dimethylphenyl)borate,
N,N-dimethylanilinium tetrakis(pentafluorophenyl)borate,
triphenylcarbenium tetrakis(p-tolyl)borate,
triphenylcarbenium tetrakis(m-tolyl)borate,
triphenylcarbenium tetrakis(2,4-dimethylphenyl)borate,
triphenylcarbenium tetrakis(3,5-dimethylphenyl)borate,
triphenylcarbenium tetrakis(pentafluorophenyl)borate,
tropylium tetrakis(p-tolyl)borate,
tropylium tetrakis(m-tolyl)borate,

tropylium tetrakis(2,4-dimethylphenyl)borate,
tropylium tetrakis(3,5-dimethylphenyl)borate,
tropylium tetrakis(pentafluorophenyl)borate,
lithium tetrakis(pentafluorophenyl)borate,
lithium tetrakis(phenyl)borate,
lithium tetrakis(p-tolyl)borate,
lithium tetrakis(m-tolyl)borate,
lithium tetrakis(2,4-dimethylphenyl)borate,
lithium tetrakis(3,5-dimethylphenyl)borate,
lithium tetrafluoroborate,
sodium tetrakis(pentafluorophenyl)borate,
sodium tetrakis(phenyl)borate,
sodium tetrakis(p-tolyl)borate,
sodium tetrakis(m-tolyl)borate,
sodium tetrakis(2,4-dimethylphenyl)borate,
sodium tetrakis(3,5-dimethylphenyl)borate,
sodium tetrafluoroborate,
potassium tetrakis(pentafluorophenyl)borate,
potassium tetrakis(phenyl)borate,
potassium tetrakis(p-tolyl)borate,
potassium tetrakis(m-tolyl)borate,
potassium tetrakis(2,4-dimethylphenyl)borate,
potassium tetrakis(3,5-dimethylphenyl)borate,
potassium tetrafluoroborate,
tri(n-butyl)ammonium tetrakis(p-tolyl)aluminate,
tri(n-butyl)ammonium tetrakis(m-tolyl)aluminate,
tri(n-butyl)ammonium tetrakis(2,4-dimethylphenyl)aluminate,
tri(n-butyl)ammonium tetrakis(3,5-dimethylphenyl)aluminate,
tri(n-butyl)ammonium tetrakis(pentafluorophenyl)aluminate,
N,N-dimethylanilinium tetrakis(p-tolyl)aluminate,
N,N-dimethylanilinium tetrakis(m-tolyl)aluminate,
N,N-dimethylanilinium tetrakis(2,4-dimethylphenyl)aluminate,
N,N-dimethylanilinium tetrakis(3,5-dimethylphenyl)aluminate,
N,N-dimethylanilinium tetrakis(pentafluorophenyl)aluminate,
triphenylcarbenium tetrakis(p-tolyl)aluminate,
triphenylcarbenium tetrakis(m-tolyl)aluminate,
triphenylcarbenium tetrakis(2,4-dimethylphenyl)aluminate,
triphenylcarbenium tetrakis(3,5-dimethylphenyl)aluminate,
triphenylcarbenium tetrakis(pentafluorophenyl)aluminate,
tropylium tetrakis(p-tolyl)aluminate,
tropylium tetrakis(m-tolyl)aluminate,
tropylium tetrakis(2,4-dimethylphenyl)aluminate,
tropylium tetrakis(3,5-dimethylphenyl)aluminate,
tropylium tetrakis(pentafluorophenyl)aluminate,
lithium tetrakis(pentafluorophenyl)aluminate,
lithium tetrakis(phenyl)aluminate,
lithium tetrakis(p-tolyl)aluminate,
lithium tetrakis(m-tolyl)aluminate,
lithium tetrakis(2,4-dimethylphenyl)aluminate,
lithium tetrakis(3,5-dimethylphenyl)aluminate,
lithium tetrafluoroaluminate,
sodium tetrakis(pentafluorophenyl)aluminate,
sodium tetrakis(phenyl)aluminate,
sodium tetrakis(p-tolyl)aluminate,
sodium tetrakis(m-tolyl)aluminate,
sodium tetrakis(2,4-dimethylphenyl)aluminate,
sodium tetrakis(3,5-dimethylphenyl)aluminate,
sodium tetrafluoroaluminate,

potassium tetrakis(pentafluorophenyl)aluminate,
potassium tetrakis(phenyl)aluminate,
potassium tetrakis(p-tolyl)aluminate,
potassium tetrakis(m-tolyl)aluminate,
potassium tetrakis(2,4-dimethylphenyl)aluminate,
potassium tetrakis(3,5-dimethylphenyl)aluminate and
potassium tetrafluoroaluminate.
However, the ionizing ionic compound is not limited thereto in the present invention.

The organic aluminum compound (c) employed in the present invention is a compound represented by the general formula (5), and exemplified specifically by trimethylaluminum, triethylaluminum, triisopropylaluminum, diisopropylaluminum chloride, isopropylaluminum dichloride, tributylaluminum, triisobutylaluminum, diisobutylaluminum chloride, isobutylaluminum dichloride, tri(t-butyl)aluminum, di(t-butyl)aluminum chloride, t-butylaluminum dichloride, triamylaluminum, diamylaluminum chloride and amylaluminum dichloride, but is not limited thereto.

The method of preparation of the above catalyst system is not specially limited. For example, the catalyst system may be prepared by mixing the metallocene compound (a) and the organoaluminum compound (c) in an inert solvent, and bringing the mixture into contact with the ionizing ionic compound (b). The method of catalyst preparation is not limited thereto.

The ionizing ionic compound (b) is used generally in an amount of from about 0.1 to about 100 moles, preferably from about 0.5 to about 30 moles per mole of the metallocene compound, but the amount is not specially limited thereto.

The organoaluminum compound is used preferably in an amount of from about 1 to about 10000 moles per mole of the metallocene compound, but is not specially limited thereto.

The copolymer of the present invention can be produced, for example, by copolymerizing ethylene with $\alpha$-olefin in the presence of the aforementioned catalyst system usually at a temperature of from 120 to 300 °C. The polymerization pressure is usually in the range of from ordinary pressure to 1500 $kg/cm^2$, but may be in the range of from ordinary pressure to 3500 $kg/cm^2$.

The above catalyst system may be supported by a carrier and used as a solid catalyst in the copolymerization of ethylene with $\alpha$-olefin to obtain the copolymer of the present invention. Such a solid catalyst may be prepared by depositing the metallocene compound, a mixture of the metallocene compound with the ionizing ionic compound, a reaction product of the metallocene compound with the organoaluminum compound, or the organoaluminum compound itself on a carrier such as silica, alumina, magnesium chloride, a styrenedivinylbenzene polymer, and polyethylene.

The present invention is described more specifically by reference to examples without limiting the invention in any way.

In Examples and Comparative Examples, the polymer containing conventional additives such as an antioxidant was melt-extruded and pelletized. The properties of the polymer were measured with the pelletized samples according to the methods below.

(1) MFR: Melt index measured according to ASTM D-1238

(2) $\alpha$-olefin content in the polymer: Measured by infrared absorption spectroscopy by means of an infrared spectrometer (Model FT-IR5M, manufactured by Nippon Bunko K.K.)

(3) Melting point (Tm): Measured with DSC apparatus (differential scanning calorimeter, DSC-200, made by Seiko Denshi Kogyo K.K.).

(4) Molecular weight, molecular weight distribution, and intrinsic viscosity: Measured with GPC apparatus (GPC Model 150C, made by Waters Co.). The calibration curve for the molecular weight was prepared by the universal calibration method, and corrected by use of standard polystyrenes of known molecular weights (absolute molecular weights in the range of from 2600 to 864000).

Column: TSK-GEL GMHHR-H (S) (made by Tosoh Corp.)
Detector: Refractometer and differential viscometer (made by Viscotech Co.)
Solvent: o-Dichlorobenzene
Measurement temperature: 140 °C

The measurement with the GPC/continuous viscometer was conducted according to the method reported by Max. A Haney: "The Differential Viscometer (I), A New Approach to Measurement of Specific Viscosities of Polymer Solutions": Journal of Applied Polymer Science, 30, 3023-3036 (1985); and "The Differential Viscometer (II), On-Line Viscosity Detector for Size-Exclusion Chromatography": Journal of Applied Polymer Science, 30, 3037-3049 (1985)

(5) Haze: Measured by scattered light quantity (%) according to JIS Z-8722

(6) Heat-sealing strength: Film of 200 µm was prepared by press molding. Two films were put together and heat-sealed by heating on both face at a breadth of 10 mm at 120 °C under a pressure of 2 $kg/cm^2$ for one second. The peeling strength of the heat-sealed film was measured.

(7) Activation energy of loss modulus G": Measured with a Weissenberg rheogoniometer at the measurement temperature of 190 °C in the range of frequency ( ) of from 0.01 rad/sec to 100 rad/sec according to the method described in "Reoroji Sokuteiho (Rheological Measurement)" edited by Rheology Committee of The Society of Polymer Science, Japan, published by Kyoritsu Publishing Co.

In the Examples and Comparative Examples, the procedure of polymerization, reaction and solvent purification were all conducted in an inert atmosphere. The solvent used in the reaction was purified, dried, and/or deoxidezed preliminarily in a conventional manner. The compound used in the reactions were synthesized and identified in a conventional manner.

Example 1

A high-temperature high-pressure reactor was set for continuous introduction of ethylene and hexene-1 at a pressure of 950 $kg/cm^2$ to maintain the concentration of hexene-1 at 31 mol %, and the content of the reactor was stirred at a rate of 1500 rpm. In a separate vessel, to a solution of diphenylmethylene(cyclopentadienyl)(fluorenyl)zirconium dichloride in toluene, was added a solution of triisobutylaluminum in toluene at a ratio of aluminum of 250 moles per mole of zirconium. Further thereto, a 250 moles per mole of zirconium. Further thereto, a solution of N,N-dimethylanilinium tetrakis-(pentafluorophenyl)borate in toluene was added at a ratio of boron of 2 moles per mole of zirconium. The obtained catalyst solution was charged to the reactor, and the polymerization was allowed to proceed continuously at a temperature of 193 °C.

Consequently, an ethylene/hexene-1 copolymer was obtained which had an MFR or 9.0 g/10min, and a density of 0.925 $g/cm^3$.

The properties of the resulting copolymer were as below:

Activation energy difference $\Delta Ea$ : 0.0 kcal/mol Activation energy $Ea_{(100)}$ : 8.8 kcal/mol
Short chain branching (SCB) by IR : 9.0 branches per 1000 carbons
Melt tension (MT) : 0.5 g
Haze : 12.5 %
Heat seal strength : 1.46 kg/10mm
Mw/Mn by GPC : 1.8
Largest-peak temperature in endothermic curve in DSC : 117 °C

Meanwhile the catalyst concentration was 650 µmol Zr/l, the catalyst was added in an amount of 120 ml/hr and the polymer yield was 13.3 kg/hr.

Example 2

Polymerization was conducted in the same manner as in Example 1 except that the polymerization temperature was set to be between 143 to 170 °C. Consequently an ethylene/hexene-1 copolymer was obtained which had an MFR of 3.1 g/10min, and a density of 0.917 $g/cm^3$.

The properties of the resulting copolymer were as below:

Activation energy difference $\Delta Ea$ : 0.0 kcal/mol
Activation energy $Ea_{(100)}$ : 8.8 kcal/mol
Short chain branching (SCB) by IR : 11.9 branches per 1000 carbons
Melt tension (MT) : 1.4 g
Haze : 3.5 %
Heat seal strength : 1.51 kg/10mm
Mw/Mn by GPC : 2.0
Largest-peak temperature in endothermic curve in DSC : 112 °C

Meanwhile the catalyst concentration was 650 µmol Zr/l, the catalyst was added in an amount of 215 ml/hr and the polymer yield was 11.2 kg/hr.

Example 3

Polymerization was conducted in the same manner as in Example 1 except that the polymerization temperature was set to be between 133 to 160 °C. Consequently an ethylene/hexene-1 copolymer was obtained which had an MFR of 2.6 g/10min, and a density of 0.915 $g/cm^3$.

The properties of the resulting copolymer were as below:
Activation energy difference ΔEa : 0.0 kcal/mol
Activation energy $Ea_{(100)}$ : 9.4 kcal/mol
Short chain branching (SCB) by IR : 13.9 branches per 1000 carbons
Melt tension (MT) : 1.7 g
Haze : 2.0 %
Heat seal strength : 1.55 kg/10mm
Mw/Mn by GPC : 2.1
Largest-peak temperature in endothermic curve in DSC : 109 °C

Meanwhile the catalyst concentration was 650 μmol Zr/l, the catalyst was added in an amount of 210 ml/hr and the polymer yield was 10.0 kg/hr.

Comparative Examples 1 to 3

Commercial LLDPE's (trade name: NIPOLON, manufactured by Tosoh Corporation) were evaluated in the same manner as in Example 1. LLDPE of Grade ZM431-1 was employed in Comparative Example 1, LLDPE of Grade ZF210-1 was employed in Comparative Example 2, and LLDPE of Grade OP227Y was employed in Comparative Example 3. The evaluation results are shown in Table 1.

The dependency of the activation energies of the above copolymers on the frequency is shown in Fig. 1, and the relation of the melt tension and the MFR of the above polymers is shown in Fig. 2.

Comparative Example 4

In 10-liter autoclave, were placed 7000 ml of toluene and 100 ml of hexene-1. Thereto, 10 μmol of dimethylsilyl(t-butylamido)(tetramethylcyclopentadienyl)titanium dichloride synthesized by a known method, and 10 mmol of methylaluminoxane were added as the catalyst in the named order. Then the polymerization was conducted at an ethylene partial pressure of 16 $kg/cm^2$ and a hydrogen partial pressure of 0.2 $kg/cm^2$ at 80 °C for one hour.

After the polymerization, the resulting polymer was washed with a large amount of ethanol, and was dried at a reduced pressure at 80 °C for 8 hours. Consequently, an ethylene/hexene-1 copolymer was obtained which had an MFR of 0.86 g/10min, and a density of 0.919 $g/cm^3$. The yield of polymer was 550 g/hr.

The properties of the resulting copolymer were as below:
Activation energy difference Ea : 6.8 kcal/mol
Activation energy $Ea_{(100)}$ : 7.6 kcal/mol
Short chain branching (SCB) by IR : 10.5 branches per 1000 carbons
Melt tension (MT) : 9.5 g
Haze : 5.0 %
Heat seal strength : 0.99 kg/10mm
Mw/Mn by GPC : 3.1
Largest-peak temperature in endothermic curve in DSC : 109.0 °C

Comparative Example 5

In 10-liter autoclave, were placed 5000 ml of toluene and 250 ml of hexene-1. Thereto, 10 μmol of bis-(cyclopentadienyl)zirconium dichloride, and 40 mmol of methylaluminoxane were added as the catalyst in the named order. Then the polymerization was conducted at an ethylene partial pressure of 4 $kg/cm^2$ and a hydrogen partial pressure of 0.1 $kg/cm^2$ at 80 °C for one hour.

After the polymerization, the resulting polymer was washed with a large amount of ethanol, and was dried at a reduced pressure at 80 °C for 8 hours. Consequently, 415 g of an ethylene/hexene-1 copolymer was obtained which had an MFR of 10.0 g/10min, and a density of 0.926 $g/cm^3$.

The properties of the resulting copolymer were as below:
Activation energy difference Ea : 0.0 kcal/mol
Activation energy $Ea_{(100)}$ : 7.2 kcal/mol
Short chain branching (SCB) by IR : 8.5 branches per 1000 carbons
Melt tension (MT) : 0.3 g
Haze : 13.0 %
Heat seal strength : 1.05 kg/10mm

Mw/Mn by GPC : 1.9
Largest-peak temperature in endothermic curve in DSC : 118.0 °C

Comparative Example 6

In 2-liter autoclave, were placed 500 ml of toluene and 10 ml of hexene-1. Thereto, 1 μmol of diphenylmethylene(cyclopentadienyl)(fluorenyl)zirconium dichloride, 5 μmol of anilinium tetrakispentafluorophenylborate, and 250 μmol of triisobutylaluminum were added as the catalyst in the named order. Then the polymerization was conducted at an ethylene partial pressure of 3.1 kg/cm$^2$ and a hydrogen partial pressure of 0.9 kg/cm$^2$ at 80 °C for one hour.

After the polymerization, the resulting polymer was washed with a large amount of ethanol, and was dried at a reduced pressure at 80 °C for 8 hours. Consequently, 43 g of an ethylene/hexene-1 copolymer was obtained which had an MFR of 1.4 g/10min, and a density of 0.911 g/cm$^3$.

The properties of the resulting copolymer were as below:
Activation energy difference Ea : 3.0 kcal/mol
Activation energy $Ea_{(100)}$ : 6.2 kcal/mol
Short chain branching (SCB) by IR :
17.1 branches per 1000 carbons Mw/Mn by GPC : 2.0
Largest-peak temperature in endothermic curve in DSC : 101.0 °C

Comparative Example 7

In 1-liter autoclave, were placed 600 ml of ISOPER (trademark: produced by Idemitsu Petrochemical Industries, Ltd.) and 10 ml of hexene-1. Thereto, a separately prepared catalyst mixture of 0.5 μmol of diphenylmethylene-(cyclopentadienyl)(fluorenyl)zirconium dichloride, 1.0 μmol of anilinium tetrakispentafluorophenylborate, and 125 μmol of triisobutylaluminum in toluene was added. The polymerization was conducted at an ethylene partial pressure of 6 kg/cm$^2$ at 150 °C for 20 minutes.

After the polymerization, the resulting polymer was washed with a large amount of ethanol, and was dried at a reduced pressure at 80 °C for 8 hours. Consequently, 30 g of an ethylene/hexene-1 copolymer was obtained which had an MFR of 2.3 g/10min, and a density of 0.927 g/cm$^3$.

The properties of the resulting copolymer were as below:
Activation energy difference Ea : 2.3 kcal/mol
Activation energy $Ea_{(100)}$ : 6.2 kcal/mol
Short chain branching (SCB) by IR : 10.6 branches per 1000 carbons
Mw/Mn by GPC : 2.5
Largest-peak temperature in endothermic curve in DSC : 110.0 °C

As described above, the present invention provides a novel ethylene copolymer which has unique properties in comparison with conventional LLDPE and is excellent in melt elasticity, transparency, and heat-sealing properties.

Table 1

| | Example | | | Comparative Example | | | | | | |
|---|---|---|---|---|---|---|---|---|---|---|
| | 1 | 2 | 3 | 1 | 2 | 3 | 4 | 5 | 6 | 7 |
| MFR (g/10min) | 9.0 | 3.1 | 2.6 | 8.0 | 2.0 | 2.2 | 0.86 | 10.0 | 1.4 | 2.3 |
| Density (g/cm$^3$) | 0.925 | 0.917 | 0.915 | 0.930 | 0.920 | 0.912 | 0.919 | 0.926 | 0.911 | 0.927 |
| $Ea_{(100)}$ (kcal/mol) | 8.8 | 8.8 | 9.4 | 7.2 | 7.6 | 8.8 | 7.6 | 7.2 | 6.2 | 6.2 |
| Ea | 0.0 | 0.0 | 0.0 | 0.0 | 0.0 | 0.0 | 6.8 | 0.0 | 3.0 | 2.3 |
| SCB (/1000C) | 9.0 | 11.9 | 13.9 | 7.9 | 12.6 | 18.0 | 10.5 | 8.5 | 17.1 | 10.6 |
| Melt tension (g) | 0.5 | 1.4 | 1.7 | 0.3 | 1.6 | 1.5 | 9.5 | 0.3 | | |
| Haze (%) | 12.5 | 3.5 | 2.0 | 52.0 | 42.0 | 19.5 | 5.0 | 13.0 | | |
| Heat Sealing Strength (kgf/10mm) | 1.46 | 1.51 | 1.55 | 0.06 | 0.22 | 1.39 | 0.99 | 1.05 | | |
| Mw/Mn | 1.8 | 2.0 | 2.1 | 5.0 | 3.8 | 5.0 | 3.1 | 1.9 | 2.0 | 2.5 |
| Tm(°C) | 117 | 112 | 109 | 124 | 121 | 120 | 109.0 | 118.0 | 101.0 | 110.0 |

## Claims

1. An ethylene/α-olefin copolymer constituted of ethylene with α-olefin of three or more carbons, satisfying the conditions:

(A) MFR ranging from 0.001 to 100 g/10min,
(B) density (d) ranging from 0.86 to 0.94 g/cm$^3$,
(C) ratio (Mw/Mn) of weight-average molecular weight (Mw) to number-average molecular weight (Mn) being not higher than 3,
(D) difference $Ea = Ea_{(0.1)} - Ea_{(100)}$ of the activation energies $Ea_{(0.1)}$ and $Ea_{(100)}$ (kcal/mol) of loss elastic modulus G'' at the standard temperature 190 °C at frequency $\omega_0 = 0.1$ (rad/sec) and $\omega_1 = 100$ (rad/sec), respectively, satisfies the relation (1) below:

$$-0.3 < \Delta Ea < 0.3 \qquad (1)$$

and $Ea_{(100)}$ and short chain branching number (SCB) satisfy the relation (2) below:

$$Ea_{(100)} > 0.155 \times SCB + 6.5 \qquad (2)$$

FIG. 1

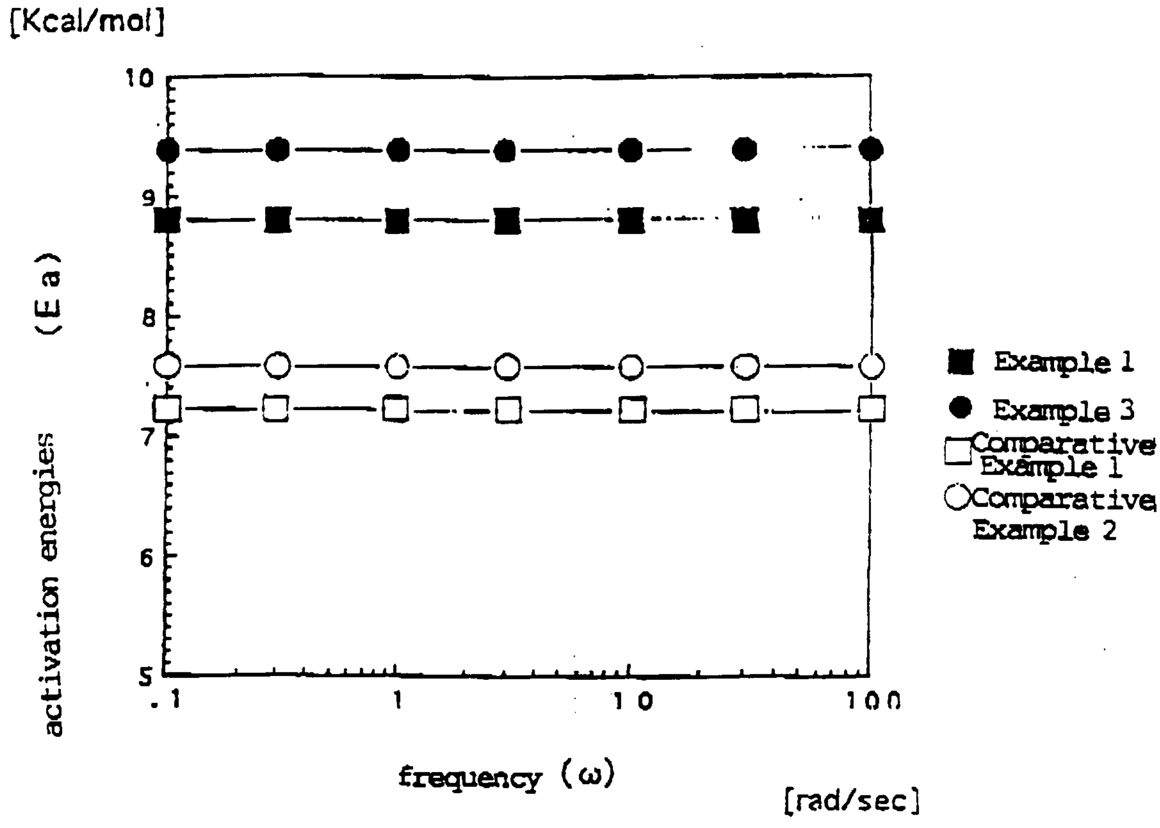


Relation between activation energies and frequency

FIG. 2

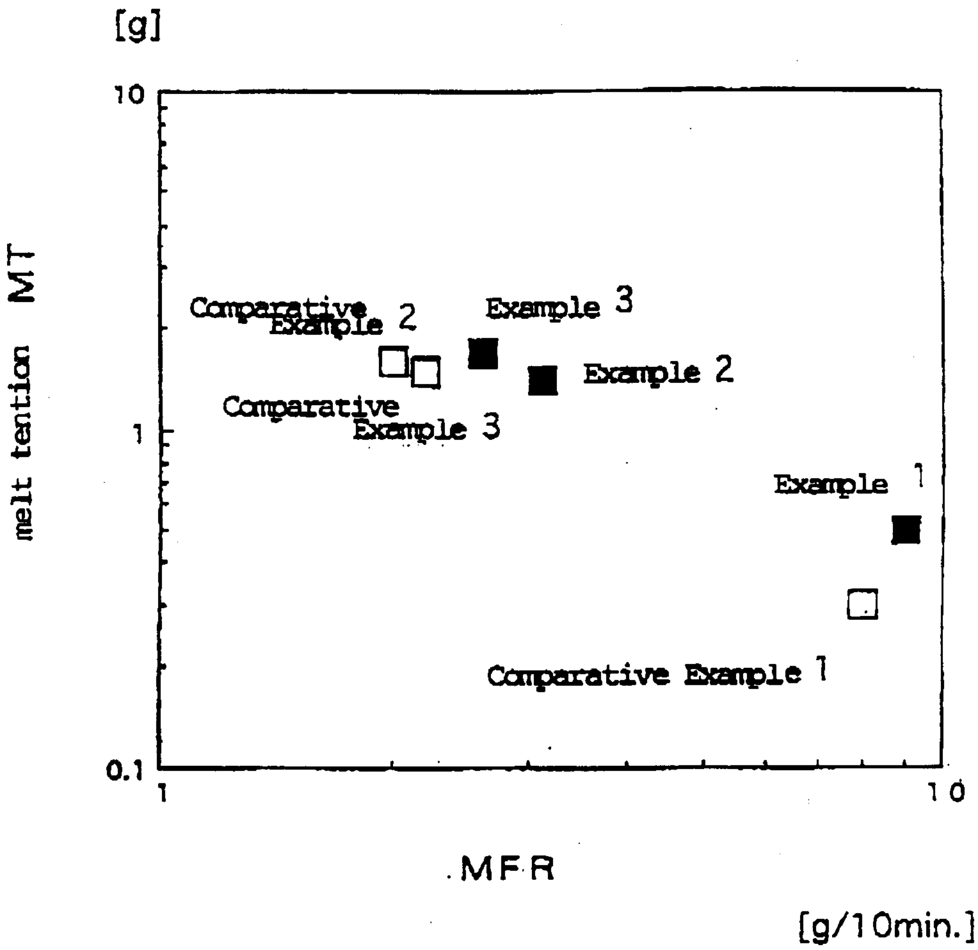


Relation between Melt tension and MFR
of the copolymers

European Patent Office

# EUROPEAN SEARCH REPORT

Application Number
EP 94 11 7674

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 612 769 (TOSOH CORPORATION)<br>* example 1 *<br>* claim 1 *<br>* tables 1,3 * | 1 | C08F210/16 |
| X | EP-A-0 107 967 (MITSUI PETROCHEMICAL INDUSTRIES)<br>* tables 2,7 * | 1 | |
| A | US-A-4 363 904 (WILLIAM A. FRASER)<br>* table B *<br>* claim 1 * | 1 | |
| A | POLYMER JOURNAL,<br>vol.24, no.9, 1992, TOKYO<br>pages 939 - 949, XP330633<br>HOSODA SATURU 'Effect of the structural distribution on the mecanical properties of linear low-density polyethylenes'<br>* table I * | 1 | |

TECHNICAL FIELDS SEARCHED (Int.Cl.6)

C08F

The present search report has been drawn up for all claims

| Place of search | Date of completion of the search | Examiner |
|---|---|---|
| THE HAGUE | 27 January 1995 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document